# EUROPEAN PATENT SPECIFICATION

(11) **EP 3 716 252 B1**
(45) Date of publication and mention of the grant of the patent: **19.07.2023**
(21) Application number: 19165034.0
(22) Date of filing: 25.03.2019
(51) Int. Cl.: G09C 1/00, H04L 9/08

(54) **BLINDING ATTACK DETECTING DEVICE AND METHOD**
VORRICHTUNG UND VERFAHREN ZUR ERKENNUNG VON BLENDUNGSANGRIFFEN
DISPOSITIF ET PROCÉDÉ DE DÉTECTION D'ATTAQUE AVEUGLANTE

(43) Date of publication of application: 30.09.2020
(73) Proprietor: ID Quantique S.A., 1227 Carouge (CH)
(72) Inventor: Bussières, Félix, 1234 Vessy (CH); Gras, Gaëtan, 74580 Viry (FR)
(74) Representative: Kraus & Weisert Patentanwälte PartGmbB

(56) References cited:
- US-B2- 8 890 049
- ALEXANDER KOEHLER-SIDKI ET AL: "Intensity modulation as a preemptive measure against blinding of single-photon detectors based on self-differencing cancellation", ARXIV.ORG, CORNELL UNIVERSITY LIBRARY, 201 OLIN LIBRARY CORNELL UNIVERSITY ITHACA, NY 14853, 3 August 2018 (2018-08-03), XP081412058, DOI: 10.1103/PHYSREVA.98.022327
- LARS LYDERSEN ET AL: "Thermal blinding of gated detectors in quantum cryptography", INTERNET CITATION, 14 September 2010 (2010-09-14), pages 1-10, XP007920760, Retrieved from the Internet: URL:http://arxiv.org/pdf/1009.2663v1.pdf

## Description

The present invention relates to a device and a method for detecting blinding attacks in a telecommunication system based on single-photon communication, in particular in a Quantum Key Distribution system.

### Background of the invention

Quantum cryptography or quantum key distribution, in the following also referred to as QKD, is a method allowing the distribution of a secret key between two distant parties, the emitter and the receiver, with a provable absolute security. Quantum key distribution relies on quantum physics principles and encoding information in quantum states, or qubits, as opposed to classical communication's use of bits. Usually, photons are used for these quantum states. Quantum key distribution exploits certain properties of these quantum states to ensure its security.

More particularly, the security of this method comes from the fact that the measurement of a quantum state of an unknown quantum system modifies the system itself. In other words, a spy eavesdropping on a quantum communication channel cannot get information on the key without introducing errors in the key exchanged between the emitter and the receiver thereby informing the user of an eavesdropping attempt.

The encryption devices enable secure transmission of useful payload by performing some kind of symmetric encryption using the keys exchanged by quantum key distribution. Specific quantum key distribution systems are described for instance in US 5,307,410, and in the article by C. H. Bennett entitled "Quantum cryptography using any two non-orthogonal states", Phys. Rev. Lett. 68, 3121 (1992).

Photon detectors are one of the main targets of attacks in quantum hacking. It was demonstrated experimentally that detectors, such as avalanche photodiode and superconducting nanowire single-photon detector, can be controlled by bright light. This can be exploited to cause a breach in the security of practical quantum key distribution systems. For example, bright light applied to an avalanche photodiode normally operating in the Geiger mode, where it can register the detection of a single-photon, can force it to operate in the so-called linear mode, where it will not register single photons, but it will register light pulses with much larger power.

It is then important to find a way to protect systems against these attacks. However, introducing new components in the QKD setup can facilitate other types of attacks.

There is therefore a need to develop a countermeasure to the blinding attack without introducing new loopholes in the system. Preferably, it would also be advantageous for such solution to work against real-scenario attacks without reducing the performances of the QKD.

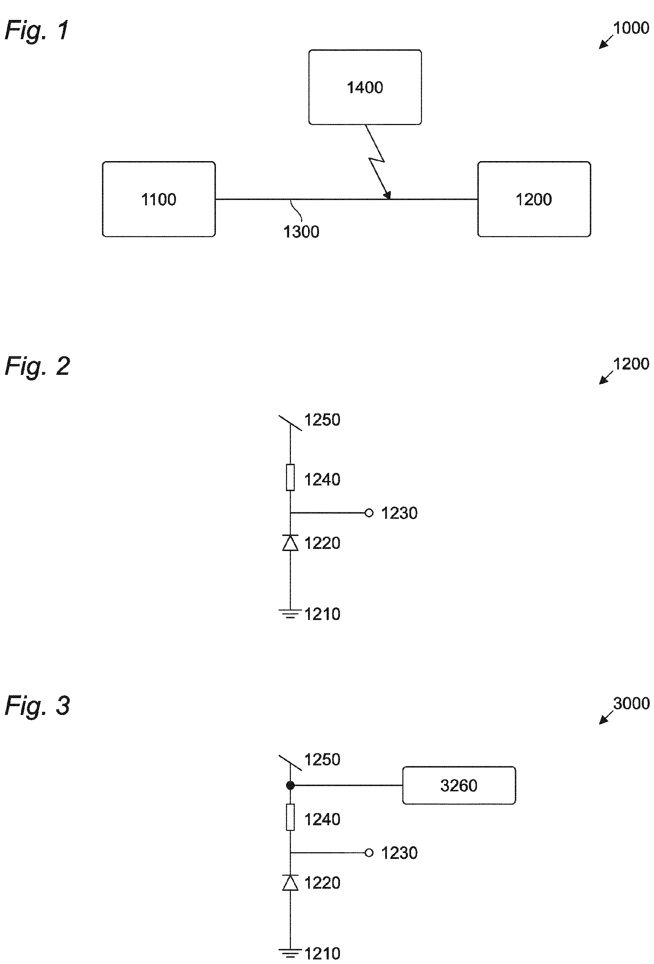

Figure 1 schematically illustrates a quantum encrypted system, for instance a quantum key distribution system, according to prior art. The system 1000 comprises a transmitter 1100, for instance a quantum key distribution transmitter, and a receiver 1200, for instance a quantum key distribution receiver, which are connected through a quantum encrypted channel 1300, for transmitting encrypted information. An eavesdropper 1400 might exploit the loopholes of practical implementations of quantum encrypted channels and hack the information transmitted through the quantum channel 1300. In particular, the eavesdropper 1400 might apply a bright laser to blind the detectors installed in the receiver 1200, and control the information. This way of blinding and then remotely controlling the detector can be exploited by a malicious party to gain some information about the key generated by quantum key distribution. If proper countermeasures are not implemented, the malicious party can perform this attack without revealing its presence to the legitimate users. A similar situation applies to superconducting nanowire single-photon detectors.

It is therefore desirable to find a way to protect systems against these attacks. Different solutions have been provided. Generally those solutions introduce new components in the quantum key distribution setup. This, on the other hand, can facilitate other types of attacks.

A countermeasure against blinding attack, as described in L. Lydersen et al. Nature Photonics, 4, 686-689 (2010), consists in introducing a strongly unbalanced beam splitter, for instance with a 90%-10% splitting ratio, at the input of the receiver. The 90% exit of the beam splitter is connected to the detection system of the receiver, while the 10% exit is connected to an optical power meter. If the eavesdropper tries to attack with bright light, the power meter measures a non-zero optical power, and the attack is revealed. Nevertheless, the implemented solution is based on introducing an additional component, namely the beam splitter, whose ratio can be manipulated by accurately tuning the wavelength of the bright beam. Additionally, this countermeasure does not prevent from real scenario attacks, where the eavesdropper accurately manipulates the light to avoid revealing itself.

Another countermeasure, as described in T. Honjo et al, Optics Express, 3, 2667 (2013), consists in using N detectors which are illuminated through a fiber beam splitter that equally divides the light among them. Under bright light attack, the N detectors will be all illuminated. By analyzing the rate of coincidental clicks between the N detectors, the attack can be detected. This countermeasure is based on a fiber beam splitter, which is a component whose coupling ratio can depend on wavelength. Hence, light at another wavelength can in principle be used for blinding only part of the N detectors, and therefore make the countermeasure unsuccessful.

Another countermeasure, as described in J. Wang et al., Eur. Phys. J. D. (2016) 70:5, consists in improving the optical scheme of the decoding unit of the quantum key distribution system. In particular, the quantum key distribution receiver is equipped with two receiving systems that are connected to a coupler. The coupler plays the same role of the beam splitters of the abovementioned solutions.

Another countermeasure, as described in T. da Silva et al., Optics Express 18911, 20 (2012), consists in implementing a real-time monitoring system of single photon detectors. In particular, the detector is constantly monitored and if it receives an intense beam light, a variation of the after-pulse is detected and the communication is stopped.

Another countermeasure, as described in patent US 9634835 B2, consists in randomly switching the parameters of the detector, in a way that cannot be predicted by an eavesdropper. The probability of the detection, which depends on the detector's parameters, is constantly monitored, and if the attacker tries to manipulate the detector, since it is impossible to the attacker to know the detector's parameters, the attacker might affect the detection rate, and the attack would be registered.

Systems for detecting blinding attacks are known, for instance, from US 8 890 049 B2 and "intensity modulation as a preemptive measure against blinding of single-photon detectors based on self-differencing cancellation", Alexander Koehler-Sidki et. al, Cornell university Ithaca, August 3, 2018.

### Object of the invention

Therefore, there is a need for a quantum communication apparatus, for instance a quantum key distribution system, that is secure against blinding attack without containing additional components, which facilitate other kinds of attacks. In particular, such external or additional components are sources of loopholes and might introduce vulnerabilities into the system that are hackable.

Moreover, all known countermeasures do not prevent from real-scenario attacks, in which the eavesdropper is capable of monitoring the blinding light.

Additionally, some of the already proposed countermeasures introduce losses and lower the intensity of the signal, consequently reducing the performances of the QKD.

Finally, the already proposed countermeasures simply stop the QKD protocol once a blinding is detected, without allowing the quantum keys to be distributed.

The invention thus aims to find a countermeasure to blinding attack without introducing new loopholes in the system, allowing the protocol to continue to run, while ensuring protection against real-scenario attacks.

### Summary of the invention

The invention is based on the general approach that a blinding attack introduces an unexpected biasing of a photodetector on the receiver side. By monitoring this bias, the blinding attack can be detected. Even more specifically, this can be detected by monitoring the biasing voltage of the photodetector on the receiver side, and/or the biasing current.

The invention is defined by the features of the independent claims.

In particular, in some aspects, it may be advantageous to measure this bias prior to a detection being made by the photodetector of the receiver side. In order to do so, it is generally possible to measure the bias conditions and store the measured value so that, when a detection is made, the stored value prior to the detection can be analyzed to evaluate if the photodetector was being subjected to a blinding attack.

Moreover, once the blinding attack has been detected, some aspects provides a manner for discarding those bits which have been intercepted by the eavesdropper, while maintaining those bits which haven't. In this manner the invention allows operation to be continued, even during a blinding attack.

In particular, an aspect can relate to a device for detecting blinding attacks in a telecommunication system based on single-photon communication, comprising: a photodetector, connected between a first voltage node and a second voltage node, a biasing resistance, connected between the photodetector and the first voltage node or between the photodetector and the second voltage node, an output node connected between the photodetector and the biasing resistance, and a blinding attack detector connected to the second voltage node and configured to measure a voltage value of the second voltage node.

Thanks to this approach it is possible to detect an abnormal value of the voltage value of the second voltage node which is indicative of a blinding attack.

In some aspects the blinding attack detector can comprise a voltmeter.

Thanks to this approach the measurement of the voltage value of the second voltage node can be easily achieved.

In some aspects the photodetector can have a predetermined dead-time period, and the blinding attack detector can be configured to measure the voltage value of the second voltage node outside of the dead-time period.

Thanks to this approach it is possible to advantageously measure the voltage value of the second voltage node at a moment in time which is most revealing of the presence of a blinding attack.

In some aspects the blinding attack detector can be configured to measure the voltage value of the second voltage node before a detection made by the photodetector.

Thanks to this approach it is possible to advantageously measure the voltage value of the second voltage node at a moment in time which is most revealing of the presence of a blinding attack.

In some aspects the blinding attack detector can be further connected to the output node so as to receive a signal indicating a detection made by the photodetector, and the blinding attack detector can be configured to detect a blinding attack based on the voltage value of the second voltage node measured at a predetermined time before the detection.

Thanks to this approach is it possible for the blinding attack detector to know when a detection has been measured. This timing information allows the blinding attack detector to read the voltage value of the second voltage node which had been measured prior to the detection, in order to advantageously detect the presence of a blinding attack.

In some aspects the blinding attack detector can be configured to compare the measured voltage value of the second voltage node to a predetermined threshold voltage.

Thanks to this approach smaller variations of the second voltage node can be discarded.

In some aspects the device for detecting blinding attacks can further comprise: a gating unit connected to the blinding attack detector and to the output node, and a gated output node connected to the gating unit, wherein the gating unit can be configured to connect or disconnect the gated output node and the output node based on the measured voltage value of the second voltage node.

Thanks to this approach it is possible to prevent a detection to propagate from the output node to the gated output node, when a blinding attack has been detected.

In some aspects the device for detecting blinding attacks can further comprise: a power supply unit connected to the second voltage node, wherein the power supply unit can be configured to provide a current to the second voltage node such that the voltage value at the second voltage node is reduced when the photodetector is subjected to a blinding attack.

Thanks to this approach it is possible to observe a variation in the voltage value at the second voltage node when a larger than expected current flows through the photodetector.

A further aspect can relate to a device for detecting blinding attacks in a telecommunication system based on single-photon communication, comprising: a photodetector, connected between a first voltage node and a second voltage node, a biasing resistance, connected between the photodetector and the first voltage node or between the photodetector and the second voltage node, an output node connected between the photodetector and the biasing resistance, and a blinding attack detector configured to measure a value of the current flowing through the photodetector.

Thanks to this approach it is possible to detect a blinding attack by measuring current instead of measuring voltage.

A further aspect can relate to a method for detecting blinding attacks in a telecommunication system based on single-photon communication, the system comprising at least a photodetector, connected between a first voltage node and a second voltage node and a blinding attack detector connected to the second voltage node and configured to measure a voltage value of the second voltage node, the method comprising the steps of measuring, by the blinding attack detector, the voltage value of the second voltage node, storing the voltage value of the second voltage node, receiving, at the blinding attack detector, a signal indicating a detection by the photodetector, determining the presence of a blinding attack based on a stored voltage value of the second voltage node measured prior to the detection.

Thanks to this approach is it possible for the blinding attack detector to know when a detection has been measured. This timing information allows the blinding attack detector to read the voltage value of the second voltage node which had been measured prior to the detection, in order to advantageously detect the presence of a blinding attack.

### Brief description of the drawings

The invention will be described with reference to the drawings, in which the same reference numerals indicate the same feature. In particular,
Figure 1 schematically illustrates a quantum encryption system 1000, for instance a quantum key distribution system, according to the prior art;
Figure 2 schematically illustrates a receiver 1200 according to the prior art;
Figure 3 schematically illustrates a device for detecting blinding attacks 3000 not forming an embodiment of the invention and provided for explaining possible operations of the invention;
Figure 4 schematically illustrates the theoretical behavior from the device for detecting blinding attacks 3000;
Figure 5 schematically illustrates a device for detecting blinding attacks 5000 according to an embodiment of the invention.
Figure 6 schematically illustrates a device for detecting blinding attacks 6000 not forming an embodiment of the invention and provided for explaining possible operations of the invention;
Figure 7 schematically illustrates a device for detecting blinding attacks 7000 not forming an embodiment of the invention and provided for explaining possible operations of the invention;
Figure 8 schematically illustrates a device for detecting blinding attacks 8000 not forming an embodiment of the invention and provided for explaining possible operations of the invention.

### Detailed description

The invention will be described, for better understanding, with reference to specific embodiments. It will however be understood that the invention is not limited to the embodiments herein described but is rather defined by the claims and encompasses all embodiments which are within the scope of the claims.

Figure 2 schematically illustrates a receiver 1200 according to the prior art. In this configuration, a photodetector 1220 is connected between a ground node 1210 and an output node 1230. The output node 1230 is further connected to a biasing resistance 1240, which has its other node connected to a biasing voltage 1250. The photodetector 1220 can be implemented, for instance, as an avalanche photodiode.

In the absence of any photons reaching the photodetector 1220, the photodetector acts as an open switch. Once a photon reaches the photodetector 1220, it starts conducting current. This current also flows through the biasing resistance 1240, causing a voltage drop. By measuring such voltage drop on the output 1230 it is possible to detect the arrival of the photon on the photodetector 1220.

Figure 3 schematically illustrates a device for detecting blinding attacks 3000.

Generally, the device for detecting blinding attacks 3000 is based on the receiver 1200 and mainly differs from it due to the presence of a blinding attack detector 3260 connected so as to measure the voltage on the biasing node 1250. It will be clear that the biasing node 1250 can be connected, directly or through electronic components, to a voltage source, so as to provide an intended value of the biasing voltage at node 1250.

In particular, the device for detecting blinding attacks 3000 can be used in a telecommunication system based on single-photon communication. For instance, the device 3000 can be used on the receiver side of a QKD system, in order to determine if the receiver in under a blinding attack.

The device 3000 generally comprises at least a photodetector 1220, connected between a first voltage node 1210 and a second voltage node 1250. The photodetector can be, for instance, an avalanche photodiode or a superconducting nanowire single photon detector. The device 3000 further comprises a biasing resistance 1240, connected between the photodetector 1220 and the first voltage node 1210 or, as illustrated, between the photodetector 1220 and the second voltage node 1250. It will be clear to those skilled in the art that both those two configuration can be implemented to read out a signal indicative of the status of the photodetector 1220, so as to determine if a photon has reached the photodetector 1220, or not. The device 3000 further comprises an output node 1230 connected between the photodetector 1220 and the biasing resistance 1240. Thanks to this configuration, such as in the prior art, it is possible to measure the voltage at output node 1230 and thus measure whether the photodetector 1220 has been reached by a photon or not.

Unlike the prior art system, the device 3000 further comprises a blinding attack detector 3260 connected to the second voltage node 1250 and configured to measure a voltage value of the second voltage node 1250.

Thanks to the presence of the blinding attack detector 3260, the voltage at the node 1250 can be measured. As it will be clear from the following, the value of the biasing node can be used to detect the presence of a blinding attack. In some embodiments, the second voltage node 1250 is a biasing voltage for biasing the photodetector 1220. In some embodiments, the blinding attack detector 3260 can comprise a voltmeter in order to measure the voltage at the node 1250. It will be clear, however, that the voltage at the node 1250 can be measured in any manner and with any known instrument.

It will be clear that, in an alternative embodiment, instead of measuring the voltage at node 1250, the blinding attack detector 3260 could be configured to measure the current flowing through the photodetector 1220, for instance by measuring the current at node 1250 and/or at node 1210. In the following, the description will be based on the embodiment measuring the voltage at node 1250, it will however be clear to those skilled in the art that, by applying the appropriate modifications, some embodiments of the invention could also be based on such current measurement.

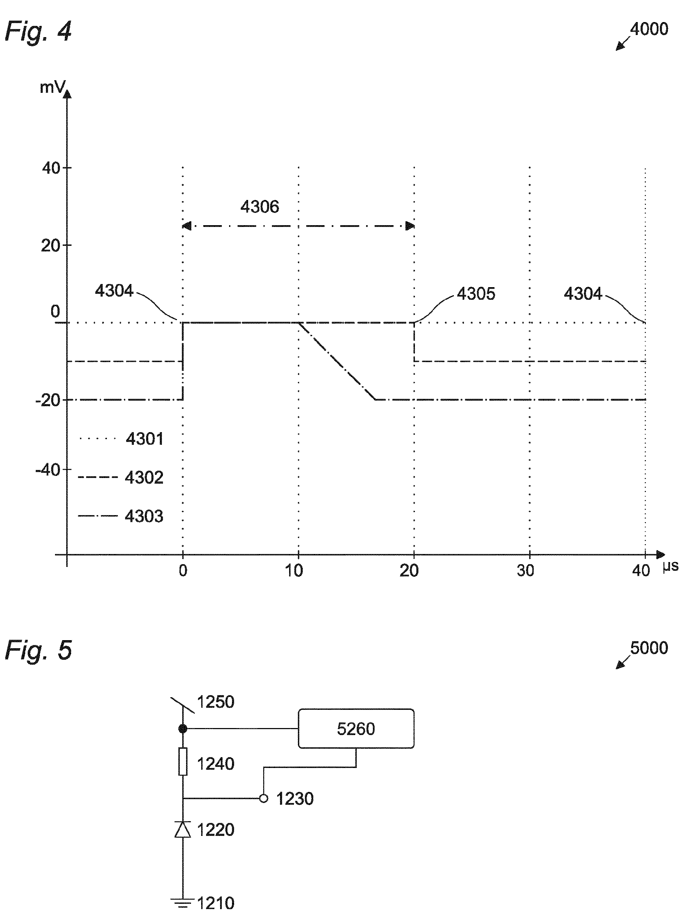

The operation of the device 3000 will be explained more in details with reference to figure 4.

On the abscissa the time is reported, in microseconds, while on the ordinate a voltage value is reported, in millivolts. The voltage value corresponds to the value measured at node 1250 from which the nominal value of the node 1250 has been subtracted. That is, a measure of 0V implies that the measured voltage at node 1250 corresponds to the nominal value of the node 1250.

Figure 4 schematically illustrates the theoretical behavior from the device for detecting blinding attacks 3000. In particular, Figure 4 illustrates a period going from just before a photon detection time point 4304, through a dead-time period 4306 of the photodetector 1220 until the start time point 4305 of a new detection and to a subsequent waiting time before the next photon detection 4304.

More specifically, figure 4 illustrates three plots 4301, 4302, 4303 corresponding to three different operational conditions of the device 3000. In particular,
- plot 4301 corresponds to a normal operation mode of the device 3000, in which a single photon reaches the photodetector 1220 approximately at time t=0;
- plot 4303 corresponds to a non-optimum blinding conditions, in which the device 3000 is subjected to a blinding laser from -10µs to 0µs and again from 10µs onward. The blinding laser changes the regime of the detector to make it insensitive to single photons. To force the detector to click, a second laser, such as a pulsed laser is used to trigger the photodetector 1220 at 0µs;
- plot 4302 corresponds to optimum blinding conditions, in which the device 3000 is subjected to a blinding laser only just before the end of the dead-time 4306 and with a minimum power, though sufficient for achieving blinding.

In this theoretical approach, the plot 4301 remains relatively constant. That is, during the operation the voltage at the biasing voltage node 1250 remains at its nominal value. It will be appreciated that, in a practical implementation, due to the switching of the photodetector 1220 at time t=0 there is a likelihood of experiencing some transitory oscillation of the voltage at node 1250, as the current start flowing through the photodetector 1220. This transitions, however, will be of short duration and will not impact the voltage of the node 1250, particularly at the time prior to the arrival of the photon, namely at time t<0.

Now, the plot 4303 will be described. In this case, the photodetector is subjected to a blinding laser for the period illustrated in figure 4 except for the time period between 0 and 10us. This causes the voltage at node 1250 to be different from its nominal value, at least during the period of time following the dead-time 4306 and preceding a new detection 4304. By measuring the voltage value at node 1250, as it can be seen from the different behavior of plot 4301 and 4303, it is thus possible to detect the blinding attack.

Plot 4302 has a behavior which is between plots 4301 and 4303. However also in this case, the voltage measurement allows detecting a difference between the normal behavior of plot 4301 and the blinded behavior of plot 4302, in particular at a time preceding the detection 4303.

As discussed above, in some implementation, the photodetector 1220 can have a predetermined dead-time period 4306 starting after the detection 4304. At the detection time 4304, and, depending on the specific implementation of the device, also possibly during the dead time 4306, the voltage at node 1250 can have some oscillations due to variations in the current flowing through the photodetector 1220. Thus, in some embodiments, in order to correctly detect the blinding attack, the voltage measurement is thus preferably carried out outside any such oscillation. Preferably, the blinding attack detector 3260 is configured to measure the voltage value of the second voltage node 1250 outside of the dead-time period 4306. Even more preferably, the blinding attack detector 3260 is configured to measure the voltage value of the second voltage node 1250 after a predetermined time before the detection 4304.

In particular, the voltage at node 1250 may be measured at a time of at least 5µs, preferably 10µs prior to the detection. Alternatively, or in addition, the voltage at node 1250 may be measured at a time of at least 10% of the dead-time period 4306, preferably at least 20% of the dead-time period 4306. Those approaches provide the advantage that the voltage at node 1250 can be measured before the switching of the photodetector, thus avoiding measuring the voltage at a time at which the voltage at node 1250 may be oscillating due to transitory current.

Alternatively, or in addition, the voltage at node 1250 may be obtained by an average measurement during a time period between 5% and 15% of the dead-time period 4306, preferably between 5% and 25% of the dead-time period 4306. This approach advantageously allows a longer measurement which may reduce the impact of noise and/or other transitory effects.

Thanks to this approach it is possible to ensure that the voltage measurement will occur in the operation time during which, when there is no blinding attack, the voltage at node 1250 should be at its nominal value.

In order for the device for the blinding attack detector 3206 to know when a detection has happened, so as to evaluate the time periods defined above, in some embodiments the blinding attack detector may be provided with an additional input to determine whether a detection has happened at the photodetector 1220. It will be clear to the skilled person that this can be implemented in several manners, for instance by measuring the voltage at node 1230 or by measuring the current through resistor 1240. In the following, for clarification, the first of those two alternatives will be described, it will however be clear that the invention is not limited to this specific embodiment.

Figure 5 schematically illustrates a device for detecting blinding attacks 5000 according to an embodiment of the invention.

In particular, the device for detecting blinding attacks 5000 of the embodiment illustrated in figure 5 differs from the device for detecting blinding attacks 3000 in that the blinding attack detector 5260 is further connected to the output node 1230 so as to receive a signal indicating a detection 4304 made by the photodetector 1220. Thanks to this connection, the blinding attack detector 5260 can be configured to detect a blinding attack based on the voltage value of the second voltage node 1250 measured at a predetermined time before the detection 4304.

That is, for instance, the blinding attack detector 5260 can be configured to continuously measure the voltage at node 1250 and store the measurement in a memory. Once a signal on the output node 1230 indicates a detection 4304 at time t=X, the blinding attack detector 5260 can recover from the memory the voltage at node 1250 measured at time t=X-Y, wherein Y is a predetermined time, for instance defined as described above, so as to evaluate the time at voltage node 1250 prior to the detection 4304.

In the illustrated embodiment, the connection between the blinding attack detector 5260 is directly connected to the output node 1230. It will be clear that, in some alternative embodiments, there may be additional elements connected between the blinding attack detector 5260 and the output node 1230, for instance amplifiers or some logic gates. A direct connection between blinding attack detector 5260 and the output node 1230 is therefore not needed, as long as a connection is present between the blinding attack detector 5260 and the output node 1230 which allows the blinding attack detector 5260 to receive a signal indicating that a detection 4304 has taken place at the photodetector 1220.

In this respect, an embodiment of the invention can also relate to a method for detecting blinding attacks in a telecommunication system based on single-photon communication, the system comprising at least the photodetector 1220, connected between the first voltage node 1210 and the second voltage node 1250 and a blinding attack detector 5260 connected to the second voltage node 1250 and configured to measure a voltage value of the second voltage node 1250, in a manner similar to what described above. The method can comprise the steps of measuring, by the blinding attack detector 5260, the voltage value of the second voltage node 1250 and storing the voltage value of the second voltage node 1250. At the same time, the blinding attack detector 5260 can be configured to receive a signal indicating a detection 4304 by the photodetector 1230, for instance by connecting it, directly or through other elements, to the output node 1230 or in general by providing the blinding attack detector 5260 with any signal which allows the blinding attack detector 5260 to be informed that a detection 4304 has taken place. When this information reaches the blinding attack detector 5260, the presence of a blinding attack can then be determined based on a stored voltage value of the second voltage node 1250 measured prior to the detection 4304.

As discussed above, while the detection 4304 can be identified by measuring the voltage at node 1230 alternative implementations can be provided. For instance it may be possible to measure the current flowing through node 1250 or node 1210. That is, several circuit configurations are possible which allow the blinding attack detector 5260 to be informed of the presence of a detection 4304.

As it will be clear from the above, by comparing the voltage value measured at node 1250 with its nominal value it is possible to recognize a normal operation from a blinding attack. In order to allow this comparison, in some embodiments the blinding attack detector 3260 is configured to compare the measured voltage value of the second voltage node 1250 to a predetermined threshold voltage. The threshold voltage can be, for instance, the nominal value of voltage at node 1250 with an additional tolerance, such as, for instance, 2 mV, preferably 5mV, to avoid false positives. Alternatively, or in addition, the tolerance can be expressed as a percentage of the nominal value of voltage at node 1250, such as, for instance, less than 0.1% of the nominal value of the voltage at node 1250.

As described above, the invention allows the detection of blinding attacks. The information indicating the presence of a blinding attack can then be used to advantageously discard the bits which the receiver has received during an attack.

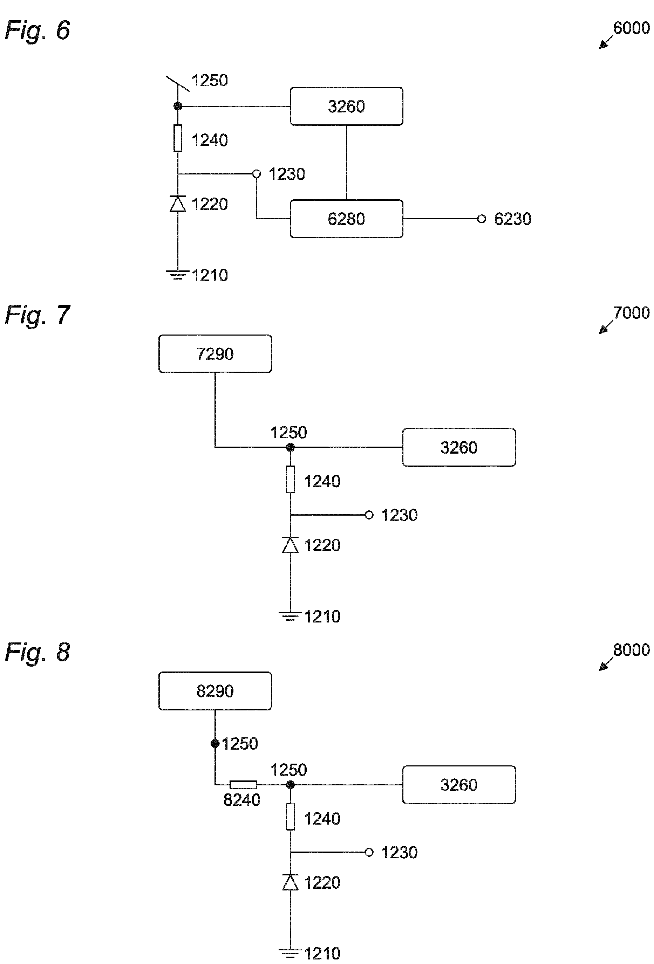

Figure 6 schematically illustrates a device for detecting blinding attacks 6000.

The device 6000 mainly differs from device 3000 due to the presence of a gating unit 6280 connected to the blinding attack detector 3260 and to the output node 1230, and a gated output node 6230 connected to the gating unit 6280. The gating unit 6280 is configured to connect or disconnect the gated output node 6230 and the output node 1230 based on the measured voltage value of the second voltage node 1250. It will be clear to those skilled in the art that the gating unit can be implemented in several different manners, realizing the behavior described above.

Thanks to the gating unit, the output present at gated output node 6230 is not impacted by the blinding attack, since in the presence of a blinding attack the gated output node 6230 will not present any variation, as the gating unit will prevent this based on the indication of the blinding attack provided by the blinding attack detector 3260.

Figure 7 schematically illustrates a device for detecting blinding attacks 7000.

The device 7000 mainly differs from device 3000 due to the presence of a power supply unit 7290 connected to the second voltage node 1250. The power supply unit 7290 is configured to provide a current to the second voltage node 1250 such that, the voltage at node 1250 is reduced when the photodetector 1220 is subjected to a blinding attack.

Practical implementations of the power supply units are all likely to exhibit a drop in voltage at node 1250 when the photodetector 1220 is subjected to a blinding attack. The skilled person may however select a power supply unit 7290 which increases this effect, by selecting a power supply unit 7290 which can provide a maximum current lower than the current which can flow through the photodetector 1220 when subjected to a blinding attack.

It will be clear, however, that the present invention is not limited to the use of power supply unit 7290. That is, the invention can also operate in case the power supply unit connected at node 1250 can provide enough current to maintain the voltage at node 1250 at its nominal value, independently on the state of the photodetector 1220.

Figure 8 schematically illustrates a device for detecting blinding attacks 8000. In particular, even if the power supply unit 8290 is assumed to be an ideal generator, which can maintain the voltage at node 8250 constant, independently on the current drawn by the load, the introduction of a second biasing resistance 8240 causes the voltage at node 1250 to drop when the photodetector 1220 is subjected to a blinding attack, thus at least partially conducting current.

Although the invention has been described with reference to several distinct embodiments, it will be clear to those skilled in the art that various features of different embodiments can be freely combined, within the scope of the claims, to implement further embodiments of the invention.

That is, for instance, all embodiments in which, for clarification purpose, the timing of the voltage measurement and/or the storing of voltage values have been discussed can also be implemented in combination with the current-based embodiments, in which naturally it will be the current values which are stored, and/or the timing of the current measurement will be relevant.

Moreover, for example, it will be clear that the gating unit 6280 disclosed only in the embodiment of figure 6 can be applied to any other embodiment, in combination with the features of other embodiments. The same holds for the blinding attack detector 5260, and/or the power supply unit 7290 and/or the power supply unit 8290 with the resistance 8240.

That is, it will be clear to those skilled in the art that one or more feature from one or more embodiments can be combined in different embodiments without requiring all features form the respective embodiments to be combined together.

### List of reference numerals

- 1000:: QKD system
- 1100:: transmitter
- 1200:: receiver
- 1210:: ground
- 1220:: photodetector
- 1230:: output node
- 1240:: biasing resistance
- 1250:: biasing voltage
- 1300:: quantum encrypted channel
- 1400:: eavesdropper
- 3000:: device for detecting blinding attacks
- 3260:: blinding attack detector
- 4000:: schematic operation of device 3000
- 4301:: single photon conditions
- 4302:: optimum blinding conditions
- 4303:: non-optimum blinding conditions
- 4304:: detection
- 4305:: end dead-time
- 4306:: dead-time
- 5000:: device for detecting blinding attacks
- 5260:: blinding attack detector
- 6000:: device for detecting blinding attacks
- 6230:: gated output node
- 6280:: gating unit
- 7000:: device for detecting blinding attacks
- 7290:: power supply unit
- 8000:: device for detecting blinding attacks
- 8240:: biasing resistance
- 8290:: power supply unit

## Claims

1. Device for detecting blinding attacks (5000, 6000) in a telecommunication system based on single-photon communication, comprising:
a photodetector (1220), connected on one of its ends to one of a first voltage node (1210) and a second voltage node (1250),
a biasing resistance (1240), connected between the other end of the photodetector (1220) and the other one of the first voltage node (1210) and the second voltage node (1250), and
an output node (1230) connected between the photodetector (1220) and the biasing resistance (1240), and
a blinding attack detector (3260, 5260) connected to the second voltage node (1250) and configured to measure a voltage value of the second voltage node (1250),
wherein the blinding attack detector (5260) is further connected to the output node (1230) so as to receive a signal indicating a detection (4304) made by the photodetector (1220),
wherein the blinding attack detector (5260) is configured to detect a blinding attack based on the voltage value of the second voltage node (1250) measured at a predetermined time before the detection (4304).

2. Device for detecting blinding attacks (5000, 6000) in accordance with claim 1, wherein the blinding attack detector (3260, 5260) comprises a voltmeter.

3. Device for detecting blinding attacks (5000, 6000) in accordance with any previous claim, wherein the photodetector (1220) has a predetermined dead-time period (4306), wherein the blinding attack detector (3260, 5260) is configured to measure the voltage value of the second voltage node (1250) outside of the dead-time period (4306).

4. Device for detecting blinding attacks (5000, 6000) in accordance with any previous claim, wherein the blinding attack detector (3260, 5260) is configured to compare the measured voltage value of the second voltage node (1250) to a predetermined threshold voltage.

5. Device for detecting blinding attacks (6000) in accordance with any previous claim, further comprising:
a gating unit (6280) connected to the blinding attack detector (3260, 5260) and to the output node (1230), and
a gated output node (6230) connected to the gating unit (6280),
wherein the gating unit (6280) is configured to connect or disconnect the gated output node (1230) and the output node (1230) based on the measured voltage value of the second voltage node (1250).

6. Device for detecting blinding attacks (5000, 6000) in a telecommunication system based on single-photon communication, comprising:
a photodetector (1220), connected on one of its ends to one of a first voltage node (1210) and a second voltage node (1250),
a biasing resistance (1240), connected to the other end of the photodetector (1220) and the other one of the first voltage node (1210) and the second voltage node (1250), and
an output node (1230) connected between the photodetector (1220) and the biasing resistance (1240), and
a blinding attack detector (3260, 5260) configured to measure a value of the current flowing through the photodetector (1220),
wherein the blinding attack detector (5260) is further connected to the output node (1230) so as to receive a signal indicating a detection (4304) made by the photodetector (1220),
wherein the blinding attack detector (5260) is configured to detect a blinding attack based on the value of the current flowing through the photodetector (1220) measured at a predetermined time before the detection (4304).

7. A method for detecting blinding attacks in a telecommunication system based on single-photon communication, the system comprising at least a photodetector (1220) connected on one of its ends to one of a first voltage node (1210) and a second voltage node (1250), a biasing resistance (1240) connected to the other end of the photodetector (1220) and the other one of the first voltage node (1210) and the second voltage node (1250), and an output node (1230) connected between the photodetector (1220) and the biasing resistance (1240), and a blinding attack detector (5260) connected to the second voltage node (1250) and configured to measure a voltage value of the second voltage node (1250), wherein the blinding attack detector (5260) is further connected to the output node (1230) so as to receive a signal indicating a detection (4304) made by the photodetector (1220), the method comprising the steps of
measuring, by the blinding attack detector (5260), the voltage value of the second voltage node (1250),
storing the voltage value of the second voltage node (1250),
receiving, at the blinding attack detector (5260), a signal indicating a detection (4304) by the photodetector (1230),
determining the presence of a blinding attack based on a stored voltage value of the second voltage node (1250) measured prior to the detection (4304).

## Patentansprüche

1. Einrichtung zum Erkennen von Blendungsangriffen (5000, 6000) in einem auf Ein-Photonen-Kommunikation basierenden Telekommunikationssystem, umfassend:
einen Photodetektor (1220), der an einem seiner Enden mit einem ersten Spannungsknoten (1210) oder einem zweiten Spannungsknoten (1250) verbunden ist,
einen Vorspannungswiderstand (1240), der zwischen dem anderen Ende des Photodetektors (1220) und dem anderen von dem ersten Spannungsknoten (1210) oder dem zweiten Spannungsknoten (1250) verbunden ist, und
einen Ausgangsknoten (1230), der zwischen dem Photodetektor (1220) und dem Vorspannungswiderstand (1240) verbunden ist, und
einen Blendungsangriffsdetektor (3260, 5260), der mit dem zweiten Spannungsknoten (1250) verbunden und ausgestaltet ist, um einen Spannungswert des zweiten Spannungsknotens (1250) zu messen,
wobei der Blendungsangriffsdetektor (5260) darüber hinaus mit dem Ausgangsknoten (1230) verbunden ist, um ein Signal zu empfangen, das eine durch den Photodetektor (1220) durchgeführte Erkennung (4304) anzeigt,
wobei der Blendungsangriffsdetektor (5260) ausgestaltet ist, um einen Blendungsangriff basierend auf dem Spannungswert des zweiten Spannungsknotens (1250), der zu einem vorbestimmten Zeitpunkt vor der Erkennung (4304) gemessen wurde, zu erfassen.

2. Einrichtung zum Erkennen von Blendungsangriffen (5000, 6000) nach Anspruch 1, wobei der Blendungsangriffsdetektor (3260, 5260) ein Voltmeter umfasst.

3. Einrichtung zum Erkennen von Blendungsangriffen (5000, 6000) nach einem der vorhergehenden Ansprüche, wobei der Photodetektor (1220) eine vorbestimmte Totzeit (4306) aufweist,
wobei der Blendungsangriffsdetektor (3260, 5260) ausgestaltet ist, um den Spannungswert des zweiten Spannungsknotens (1250) außerhalb der Totzeit (4306) zu messen.

4. Einrichtung zum Erkennen von Blendungsangriffen (5000, 6000) nach einem der vorhergehenden Ansprüche,
wobei der Blendungsangriffsdetektor (3260, 5260) ausgestaltet ist, um den gemessenen Spannungswert des zweiten Spannungsknotens (1250) mit einer vorbestimmten Schwellenspannung zu vergleichen.

5. Einrichtung zum Erkennen von Blendungsangriffen (6000) nach einem der vorhergehenden Ansprüche, die darüber hinaus umfasst
eine Torsteuereinheit (6280), die mit dem Blendungsangriffsdetektor (3260, 5260) und mit dem Ausgangsknoten (1230) verbunden ist, und
einen torgesteuerten Ausgangsknoten (6230), der mit der Torsteuereinheit (6280) verbunden ist,
wobei die Torsteuereinheit (6280) ausgestaltet ist, um den torgesteuerten Ausgangsknoten (6230) und den Ausgangsknoten (1230) basierend auf dem gemessenen Spannungswert des zweiten Spannungsknotens (1250) zu verbinden oder zu trennen.

6. Einrichtung zum Erkennen von Blendungsangriffen (5000, 6000) in einem auf Ein-Photonen-Kommunikation basierenden Telekommunikationssystem, umfassend:
einen Photodetektor (1220), der an einem seiner Enden mit einem ersten Spannungsknoten (1210) oder einem zweiten Spannungsknoten (1250) verbunden ist,
einen Vorspannungswiderstand (1240), der mit dem anderen Ende des Photodetektors (1220) und dem anderen von dem ersten Spannungsknoten (1210) oder dem zweiten Spannungsknoten (1250) verbunden ist, und
einen Ausgangsknoten (1230), der zwischen dem Photodetektor (1220) und dem Vorspannungswiderstand (1240) verbunden ist, und
einen Blendungsangriffsdetektor (3260, 5260), der ausgestaltet ist, um einen Wert des durch den Photodetektor (1220) fließenden Stroms zu messen,
wobei der Blendungsangriffsdetektor (5260) darüber hinaus mit dem Ausgangsknoten (1230) verbunden ist, um ein Signal zu empfangen, das eine durch den Photodetektor (1220) durchgeführte Erkennung (4304) anzeigt,
wobei der Blendungsangriffsdetektor (5260) ausgestaltet ist, um einen Blendungsangriff auf der Grundlage des Wertes des durch den Photodetektor (1220) fließenden Stroms zu erkennen, der zu einem vorbestimmten Zeitpunkt vor der Erkennung (4304) gemessen wurde.

7. Verfahren zum Erkennen von Blendungsangriffen in einem auf Ein-Photonen-Kommunikation basierenden Telekommunikationssystem, wobei das System zumindest umfasst einen Photodetektor (1220), der an einem seiner Enden mit einem ersten Spannungsknoten (1210) oder einem zweiten Spannungsknoten (1250) verbunden ist, einen Vorspannungswiderstand (1240), der mit dem anderen Ende des Photodetektors (1220) und dem anderen von dem ersten Spannungsknoten (1210) oder dem zweiten Spannungsknoten (1250) verbunden ist, und einen Ausgangsknoten (1230), der zwischen dem Photodetektor (1220) und dem Vorspannungswiderstand (1240) verbunden ist, und einen Blendungsangriffsdetektor (5260), der mit dem zweiten Spannungsknoten (1250) verbunden und ausgestaltet ist, um einen Spannungswert des zweiten Spannungsknotens (1250) zu messen,
wobei der Blendungsangriffsdetektor (5260) darüber hinaus mit dem Ausgangsknoten (1230) verbunden ist, um ein Signal zu empfangen, das eine durch den Photodetektor (1220) durchgeführte Erkennung (4304) anzeigt, wobei das Verfahren die Schritte umfasst
Messen des Spannungswerts des zweiten Spannungsknotens (1250) durch den Blendungsangriffsdetektor (5260),
Speichern des Spannungswerts des zweiten Spannungsknotens (1250), Empfangen eines Signals an dem Blendungsangriffsdetektor (5260), das eine Erkennung (4304) durch den Photodetektor (1230) anzeigt,
Bestimmen des Vorhandenseins eines Blendungsangriffs auf der Grundlage eines gespeicherten Spannungswerts des zweiten Spannungsknotens (1250), der vor der Erkennung (4304) gemessen wurde.

## Revendications

1. Dispositif permettant de détecter des attaques aveuglantes (5000, 6000) dans un système de télécommunication en fonction d'une communication à photon unique, comprenant :
un photodétecteur (1220), connecté sur l'une de ses extrémités à l'un parmi un premier noeud de tension (1210) et un second noeud de tension (1250),
une résistance de polarisation (1240), connectée entre l'autre extrémité du photodétecteur (1220) et l'autre parmi le premier noeud de tension (1210) et le second noeud de tension (1250), et
un noeud de sortie (1230) connecté entre le photodétecteur (1220) et la résistance de polarisation (1240), et
un détecteur d'attaque aveuglante (3260, 5260) connecté au second noeud de tension (1250) et configuré pour mesurer une valeur de tension du second noeud de tension (1250),
dans lequel le détecteur d'attaque aveuglante (5260) est en outre connecté au noeud de sortie (1230) de façon à recevoir un signal indiquant une détection (4304) effectuée par le photodétecteur (1220),
dans lequel le détecteur d'attaque aveuglante (5260) est configuré pour détecter une attaque aveuglante en fonction de la valeur de tension du second noeud de tension (1250) mesurée à un moment prédéterminé avant la détection (4304).

2. Dispositif permettant de détecter des attaques aveuglantes (5000, 6000) selon la revendication 1, dans lequel le détecteur d'attaque aveuglante (3260, 5260) comprend un voltmètre.

3. Dispositif permettant de détecter des attaques aveuglantes (5000, 6000) selon l'une quelconque revendication précédente, dans lequel le photodétecteur (1220) a une période de temps mort prédéterminée (4306),
dans lequel le détecteur d'attaque aveuglante (3260, 5260) est configuré pour mesurer la valeur de tension du second noeud de tension (1250) en dehors de la période de temps mort (4306).

4. Dispositif permettant de détecter des attaques aveuglantes (5000, 6000) selon l'une quelconque revendication précédente, dans lequel le détecteur d'attaque aveuglante (3260, 5260) est configuré pour comparer la valeur de tension mesurée du second noeud de tension (1250) à une tension seuil prédéterminée.

5. Dispositif permettant de détecter des attaques aveuglantes (6000) selon l'une quelconque revendication précédente, comprenant en outre :
une unité de déclenchement (6280) connectée au détecteur d'attaque aveuglante (3260, 5260) et au noeud de sortie (1230), et
un noeud de sortie à déclenchement (6230) connecté à l'unité de déclenchement (6280),
dans lequel l'unité de déclenchement (6280) est configurée pour connecter ou déconnecter le noeud de sortie à déclenchement (6230) et le noeud de sortie (1230) en fonction de la valeur de tension mesurée du second noeud de tension (1250).

6. Dispositif permettant de détecter des attaques aveuglantes (5000, 6000) dans un système de télécommunication en fonction d'une communication à photon unique, comprenant :
un photodétecteur (1220), connecté sur l'une de ses extrémités à l'un parmi un premier noeud de tension (1210) et un second noeud de tension (1250),
une résistance de polarisation (1240), connectée à l'autre extrémité du photodétecteur (1220) et à l'autre parmi le premier noeud de tension (1210) et le second noeud de tension (1250), et
un noeud de sortie (1230) connecté entre le photodétecteur (1220) et la résistance de polarisation (1240), et
un détecteur d'attaque aveuglante (3260, 5260) configuré pour mesurer une valeur du courant circulant à travers le photodétecteur (1220),
dans lequel le détecteur d'attaque aveuglante (5260) est en outre connecté au noeud de sortie (1230) de façon à recevoir un signal indiquant une détection (4304) effectuée par le photodétecteur (1220),
dans lequel le détecteur d'attaque aveuglante (5260) est configuré pour détecter une attaque aveuglante en fonction de la valeur du courant circulant à travers le photodétecteur (1220) mesurée à un moment prédéterminé avant la détection (4304).

7. Procédé permettant de détecter des attaques aveuglantes dans un système de télécommunication en fonction d'une communication à photon unique, le système comprenant au moins un photodétecteur (1220) connecté sur l'une de ses extrémités à l'un parmi un premier noeud de tension (1210) et un second noeud de tension (1250), une résistance de polarisation (1240) connectée à l'autre extrémité du photodétecteur (1220) et à l'autre parmi le premier noeud de tension (1210) et le second noeud de tension (1250), et un noeud de sortie (1230) connecté entre le photodétecteur (1220) et la résistance de polarisation (1240), et un détecteur d'attaque aveuglante (5260) connecté au second noeud de tension (1250) et configuré pour mesurer une valeur de tension du second noeud de tension (1250),
dans lequel le détecteur d'attaque aveuglante (5260) est en outre connecté au noeud de sortie (1230) de façon à recevoir un signal indiquant une détection (4304) effectuée par le photodétecteur (1220), le procédé comprenant les étapes consistant à
mesurer, par le détecteur d'attaque aveuglante (5260), la valeur de tension du second noeud de tension (1250),
stocker la valeur de tension du second noeud de tension (1250),
recevoir, au niveau du détecteur d'attaque aveuglante (5260), un signal indiquant une détection (4304) par le photodétecteur (1230),
déterminer la présence d'une attaque aveuglante en fonction d'une valeur de tension stockée du second noeud de tension (1250) mesurée avant la détection (4304).
